# EUROPEAN PATENT APPLICATION

(11) **EP 4 640 636 A1**
(43) Date of publication of application: **29.10.2025**
(21) Application number: 25171675.9
(22) Date of filing: 22.04.2025
(51) Int. Cl.: C01G 53/05, C01G 53/42, H01M 4/131, H01M 4/525, H01M 10/0525, H01M 4/02

(54) **POSITIVE ELECTRODE ACTIVE MATERIAL, PREPARATION METHOD OF THEREOF, POSITIVE ELECTRODE AND RECHARGEABLE LITHIUM BATTERIES**

(30) Priority: 25.04.2024 KR 20240055655
(71) Applicant: SAMSUNG SDI CO., LTD., Yongin-si, Gyeonggi-do 17084 (KR)
(72) Inventor: CHOI, Seungyeon, 17084 Yongin-si (KR); SHIN, Dongwook, 17084 Yongin-si (KR); HONG, Soonkie, 17084 Yongin-si (KR); KIM, Soohyeon, 17084 Yongin-si (KR); HA, Jeuk, 17084 Yongin-si (KR); CHA, Minah, 17084 Yongin-si (KR); KIM, Minhan, 17084 Yongin-si (KR); LEE, Soonrewl, 17084 Yongin-si (KR)
(74) Representative: Marks & Clerk LLP

(57) **Abstract**

A positive electrode active material, a method of preparing the positive electrode active material, a positive electrode including the positive electrode active material, and a rechargeable lithium battery including the positive electrode are disclosed. The positive electrode active material includes core particles including a layered lithium nickel-based composite oxide and having a single particle shape; and a coating layer provided on the surface of the core particles and including cobalt and zirconium; wherein the lithium nickel-based composite oxide of the core particles includes aluminium and zirconium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%, based on 100 mol% of total metals excluding lithium.

## Description

### BACKGROUND

### 1. Field

One or more embodiments of the present disclosure relate to a positive electrode active material, a method of preparing the positive electrode active material, a positive electrode including the positive electrode active material, and a rechargeable lithium battery including the positive electrode.

### 2. Description of the Related Art

Portable information devices (such as cell phones, laptops, smart phones, and/or the like) and/or electric vehicles have used rechargeable lithium batteries due to their relatively high energy density and easy portability as a driving power source. Recently, research has been actively conducted using rechargeable lithium batteries with high energy density as a driving power source for hybrid vehicles and/or electric vehicles and/or as a power storage power source for energy storage systems and/or power walls.

To develop or implement rechargeable lithium batteries suitable for these applications or purposes, one or more suitable positive electrode active materials are being considered. Among them, lithium nickel-based oxide, lithium nickel manganese cobalt composite oxide, lithium nickel cobalt aluminium composite oxide, and lithium cobalt oxide are mainly or predominantly used as positive electrode active materials.

However, with the increased demand for large size, higher capacity (e.g., electrical capacity), higher energy density, and/or improved or enhanced productivity for rechargeable lithium batteries, there is a need or desire to develop enhanced methods of (for) preparing new positive electrode active materials.

### SUMMARY

One or more aspects of embodiments of the present disclosure are directed toward a method of preparing a positive electrode active material including core particles in the form of single particles effectively at a relatively low firing temperature without using an alkaline grain growth accelerator.

One or more aspects of embodiments of the present disclosure are directed toward a method that may reduce agglomeration (e.g., a degree or occurrence of agglomeration) between particles and make the overall preparing process relatively simple and economical.

One or more aspects of embodiments of the present disclosure are directed toward a positive electrode active material that may be structurally stable and free of residual impurities, thus achieving a long cycle-life without increasing resistance (e.g., electrical resistance).

Additional aspects of embodiments will be set forth in part in the description which follows and, in part, will be apparent from the description or may be learned by practice of the presented embodiments of the disclosure.

In one or more embodiments, a positive electrode active material includes core particles including a layered lithium nickel-based composite oxide and having (e.g., each having) a single particle shape (e.g., being in a signal particle form); and a coating layer provided on the surface of the core particles and including cobalt and zirconium; wherein the lithium nickel-based composite oxide of the core particles includes aluminium and zirconium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%, based on 100 mol% of total metals excluding lithium, and a molar ratio (Al/Zr) of the aluminium content (e.g., amount) to the zirconium content (e.g., amount) is greater than or equal to about 5.

In one or more embodiments, a method of preparing a positive electrode active material includes performing a co-precipitation reaction in which a mixture of a nickel precursor and a metal precursor is maintained at about pH 11 to about pH 12 for greater than or equal to 30 hours to prepare a nickel-based composite hydroxide, mixing the nickel-based composite hydroxide, anhydrous lithium hydroxide, an aluminium raw material, and a zirconium raw material and subjecting to a first heat treatment to obtain secondary particles including a layered lithium nickel-based composite oxide and made by agglomerating a plurality of primary particles, pulverizing the secondary particles, and adding and mixing the pulverized resultant, a cobalt coating material, and a zirconium coating material into an aqueous (e.g., water-soluble) solvent, and then performing a second heat treatment to obtain a positive electrode active material.

In one or more embodiments, a positive electrode includes a positive electrode current collector; and a positive electrode active material layer provided on the positive electrode current collector and including the positive electrode active material as described in one or more embodiments.

In one or more embodiments, a rechargeable lithium battery includes the positive electrode as described in one or more embodiments; a negative electrode; and an electrolyte.

At least some of the above and other features of the invention are set out in the claims.

According to one or more embodiments, the positive electrode active material may be synthesized by a simple method at a relatively low heat treatment temperature, and because no alkaline grain growth accelerator and/or the like is used during the synthesis process, substantially no residue may remain, and thus resistance (e.g., electrical resistance) may not increase, and it may be structurally stable and may implement or perform the long cycle-life characteristics of rechargeable lithium batteries. For example, because no alkaline grain growth accelerator is used during the synthesis process, substantially no residue remains, preventing or protecting from an increase in electrical resistance. This results in a structurally stable material that supports the long cycle-life characteristics of rechargeable lithium batteries.

### BRIEF DESCRIPTION OF THE DRAWINGS

FIGS. 1-4 are schematic views each illustrating a rechargeable lithium battery according to one or more embodiments.
FIG. 5 illustrates the result of scanning electron microscope-energy dispersive X-ray spectroscopy (SEM-EDS) analysis for component analysis of the coating layer on the surface of the positive electrode active material prepared in Example 1.
FIG. 6 is a graph illustrating the cycle-life characteristics of the rechargeable lithium battery cells manufactured in Example 1, Example 2, and Comparative Example 1.

### DETAILED DESCRIPTION

Hereinafter, embodiments of the present disclosure will be described in more detail. However, these embodiments are examples, the present disclosure is not limited thereto, and the present disclosure is defined by the scope of the appended claims and equivalents thereof.

As utilized herein, the singular forms "a," "an," and "the" are intended to include the plural forms as well, unless the context clearly indicates otherwise. Further, the utilization of "may" if (e.g., when) describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations or within ±30%, ±20%, ±10%, or ±5% of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As used herein, if (e.g., when) specific definition is not otherwise provided, it will be understood that if (e.g., when) an element, such as a layer, a film, a region, or a substrate, is referred to as being "on" another element, it may be directly on the other element or intervening elements may also be present. In contrast, if (e.g., when) an element is referred to as being "directly on" another element, there are no intervening elements present.

As used herein, if (e.g., when) specific definition is not otherwise provided, the singular may also include the plural. In one or more embodiments, unless otherwise specified, "A or B" may refer to "including A, including B, or including A and B."

As used herein, "combination thereof" may refer to a mixture, a stack, a composite, a copolymer, an alloy, a blend, a reaction product, and/or the like of constituents.

As used herein, if (e.g., when) a definition is not otherwise provided, a particle diameter may be an average particle diameter. This average particle diameter refers to an average particle diameter (D₅₀), which is a diameter of particles with a cumulative volume of 50 volume% in the particle size distribution. The average particle diameter (D₅₀) may be measured by methods that are generally used by or generally available to those skilled in the art, for example, by measuring with a particle size analyzer, a transmission electron microscope, and/or a scanning electron microscope. In one or more embodiments, a dynamic light-scattering measurement device may be used to perform a data analysis, and the number of particles may be counted for each particle size range. From this data, the average particle diameter (D₅₀) value may be easily obtained through a calculation. A laser diffraction method may also be used. If (e.g., when) measuring by laser diffraction, for example, the particles to be measured may be dispersed in a dispersion medium and then introduced into a generally available or generally used laser diffraction particle size measuring device (e.g., MT 3000 available from Microtrac, Ltd.) using ultrasonic waves at about 28 kHz, and after irradiation with an output of 60 W, the average particle diameter (D₅₀) based on 50% of the particle size distribution in the measuring device may be calculated.

Herein, it should be understood that terms, such as "includes" or "have" are intended to designate the presence of an embodied feature, number, step (e.g., act or task), element, and/or a (e.g., any suitable) combination thereof, but it does not preclude the possibility of the presence or addition of one or more other features, numbers, steps (e.g., act or task), elements, and/or a (e.g., any suitable) combination thereof.

"Metal" is interpreted as a concept including ordinary metals, transition metals, and/or metalloids (semi-metals).

**In** the drawings, the thicknesses of components (e.g., layers, films, panels, regions, and/or the like) are exaggerated to effectively illustrate the technical contents. Like reference numerals or symbols refer to like elements throughout, and duplicative descriptions thereof may not be provided throughout the specification.

### Positive Electrode Active Material

**In** one or more embodiments, a positive electrode active material includes core particles including a layered lithium nickel-based composite oxide and having (e.g., each having) a single particle shape (e.g., being in a single particle form); and a coating layer provided on the surface of the core particles and including cobalt and zirconium; wherein the lithium nickel-based composite oxide of the core particles includes aluminium and zirconium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%, based on 100 mol% of total metals excluding lithium, and a molar ratio (Al/Zr) of the aluminium content (e.g., amount) to the zirconium content (e.g., amount) is greater than or equal to about 5.

High-nickel positive electrode active materials with a nickel content (e.g., amount) of greater than or equal to about 60 mol% are being actively developed recently because they may achieve relatively high energy density. However, these high-nickel positive electrode active materials have limitations, such as structural deterioration due to charge and discharge, surface side reactions (e.g., undesirable side reactions) with the electrolyte, and deterioration due to particle cracks. Therefore, development of positive electrode active materials that implement high energy density and long cycle-life characteristics is desired.

As a high nickel-based positive electrode active material (e.g., a positive electrode active material including a high nickel content (e.g., amount)) that implements high capacity (e.g., electrical capacity), a secondary particle form formed by agglomeration of a plurality of primary particles is mainly or predominantly used. However, recently, a single particle form is being considered to achieve long cycle-life and reduce gas generation (e.g., a degree or occurrence of gas generation). However, increasing the firing temperature to manufacture single particles may increase the agglomeration phenomenon between particles and may cause a decrease in productivity.

In order to resolve the agglomeration between these particles and lower the fire temperature, use of an alkaline grain growth accelerator during the synthesis of single particles has been attempted. In order to resolve the agglomeration between these particles and lower the firing temperature, use of an alkaline grain growth accelerator during the synthesis of single particles was attempted. However, there is a problem that the residual grain growth accelerator after firing acts or serves as resistance (e.g., electrical resistance) within the positive electrode, causing a reduction in the lifespan. In one or more embodiments, if (e.g., when) a washing process is performed to remove residual grain growth accelerator and/or residual salts, preparation costs may increase and the process may become complicated.

Accordingly, one or more embodiments of the present disclosure provide a positive electrode active material that may be effectively synthesized even by heat treatment at a relatively low temperature, may be economical and advantageous or beneficial for mass production, and may realize or provide excellent or suitable cycle-life characteristics due to relatively high structural stability.

In order to be synthesized even by relatively low-temperature heat treatment and to implement or perform excellent or suitable cycle-life characteristics, the positive electrode active material may include a layered lithium nickel-based composite oxide as core particles.

For example, the lithium nickel-based composite oxide of the core particles is a high nickel-based oxide (e.g., an oxide including a high nickel content (e.g., amount)) having a nickel content (e.g., amount) of greater than or equal to about 60 mol% based on 100 mol% of total metals excluding lithium. The nickel content (e.g., amount) of the layered lithium nickel-based composite oxide may be, for example, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, or less than or equal to about 98 mol% based on 100 mol% of total metals excluding lithium.

In one or more embodiments, the lithium nickel-based composite oxide of the core particles includes aluminium and zirconium acting or serving as a kind or type of dopant in a set or specific amount in addition to nickel. In the lithium nickel-based composite oxide, the aluminium content (e.g., amount) is about 0.8 mol% to about 1.5 mol%, for example, about 0.8 mol% to about 1.4 mol%, about 0.8 mol% to about 1.3 mol%, or about 0.9 mol% to about 1.2 mol% based on 100 mol% of total metals excluding lithium. The zirconium content (e.g., amount) is about 0.1 mol% to about 0.3 mol%, for example, about 0.1 mol% to about 0.2 mol%, based on 100 mol% of total metals excluding lithium.

As an example, the ratio (e.g., the molar ratio) (Al/Zr) of aluminium content (e.g., amount) to zirconium content (e.g., amount) in the lithium nickel-based composite oxide of the core particles is greater than or equal to about 5, for example, about 5 to about 20, about 5 to about 15, or about 5 to about 10. In one or more embodiments, the ratio of the aluminium content (e.g., amount) to the zirconium content (e.g., amount) may be a molar ratio. If (e.g., when) the content (e.g., amount) ratio of aluminium to zirconium satisfies the foregoing ranges, a synthesis may be performed at a relatively low firing temperature without using, for example, an alkaline grain growing additive during the synthesis process, and the structural stability may be high, so that long cycle-life characteristics may be realized or provided.

In one or more embodiments, the lithium nickel-based composite oxide may be represented by Chemical Formula 1.

Chemical Formula 1 **Liₐ₁Niₓ₁M¹_{y1}Al_{z1}Zr_{w1}O_{2-b1}X_{b1}**

In Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ may be one or more elements selected from among boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), Yttrium (Y), and zinc (Zn), and X may be one or more elements selected from among fluorine (F), phosphorus (P), and sulfur (S).

In Chemical Formula 1, for example, 0.9≤a1≤1.1, 0.9≤a1≤1.05, or 0.9≤a1≤1. In one or more embodiments, 0.7≤x1≤0.991, and 0≤y1≤0.291, or 0.8≤x1≤0.991, and 0≤y1≤0.191, or 0.9≤x1≤0.991, and 0≤y1≤0.091. z1 representing the Al content (e.g., amount) may be, for example, 0.008≤z1≤0.014, 0.008≤z1≤0.013, or 0.009≤z1≤0.012. w1 representing the Zr content (e.g., amount) may be, for example, 0.001≤w1≤0.002.

In Chemical Formula 1, 5≤z1/w1, for example, 5≤z1/w1≤20, 5≤z1/w1≤15, or 5≤z1/w1≤10 may be satisfied.

For example, the lithium nickel-based composite oxide may be represented by Chemical Formula 2.

Chemical Formula 2 Liₐ₂Niₓ₂Coᵥ₂M²_{y2}Al_{z2}Zr_{w2}O_{2-b2}X_{b2}

In Chemical Formula 2, 0.9≤a2≤1.2, 0.6≤x2<0.991, 0<v2≤0.391, 0≤y2≤0.391, 0.008≤z2≤0.015, 0.001≤w2≤0.003, 0.9≤x2+v2+y2+z2+w2≤1.1, and 0≤b2≤0.1, M² may be one or more elements selected from among B, Ba, Ca, Ce, Cr, Cu, Fe, Mg, Mn, Mo, Nb, Si, Sn, Sr, Ti, V, W, Y, and Zn, and X may be one or more elements selected from among F, P, and S.

In Chemical Formula 2, 5≤z2/w2, for example, 5≤z2/w2≤20, 5≤z2/w2≤15, or 5≤z2/w2≤10 may be satisfied.

In order to ensure or provide structural stability and realize or provide long cycle-life characteristics of the positive electrode active material, core particles are in the form of single particles. In one or more embodiments, the single particles may exist alone without a grain boundary within the particle, may be composed of one particle, and may be a single particle, a monolith structure, a one body structure, or a non-agglomerated or non-aggregated particle, in which particles are not agglomerated or not aggregated with each other but may exist as an independent phase in terms of morphology, and may be expressed as a single particle (or one body particle or single grain), for example, as a single crystal. The single particles may exist alone, or single particles may be attached together. For example, two to nine single particles may be attached and may be in contact with each other.

In one or more embodiments, the single particle may exist alone, or five or less than five single particles may be attached to each other.

As an example, an average particle diameter (D₅₀) of the core particles may be about 1 µm to about 4 µm, for example, about 1.5 µm to about 4 µm, about 2 µm to about 4 µm, or about 2 µm to about 3.8 µm. Single particles satisfying the foregoing particle size ranges may be structurally stable, may increase the energy density of the positive electrode, and may improve or enhance the long cycle-life characteristics of rechargeable lithium batteries. In one or more embodiments, the average particle size may be obtained by measuring the particle size (e.g., particle diameter, major diameter, and/or major-axis length) of 20 random particles in a scanning electron microscope image, for example, to obtain the particle size distribution, and herein the size of the particle with a cumulative volume of 50 volume% (D₅₀) may have been calculated. In the context of the present application and unless defined otherwise, if (e.g., when) particles are spherical (e.g., substantially spherical), "diameter" or "size" indicates a particle diameter or an average particle diameter, and if (e.g., when) the particles are non-spherical, the "diameter" or "size" indicates a major axis length or an average major axis length.

In order to secure or provide excellent or suitable cycle-life characteristics by improving or enhancing the surface stability and ionic conductivity of the positive electrode active material, the positive electrode active material includes a coating layer.

The coating layer is provided on the surface of the core particles and includes cobalt and zirconium. By including cobalt and zirconium in the coating layer, the structural stability of the core particles may be improved or enhanced and side reactions (e.g., a degree or occurrence of undesirable side reactions) with the electrolyte solution may be effectively or suitably suppressed or reduced, thereby improving or enhancing the capacity (e.g., electrical capacity) characteristics and charge/discharge efficiency.

In one or more embodiments, the coating layer may be formed or provided continuously (e.g., substantially continuously) on the core or may be formed or provided in a discontinuous (e.g., substantially discontinuous) island shape. For example, in the coating layer, at least one selected from among cobalt (Co) and zirconium (Zr) may exist in an island form or shape.

For example, the coating layer may further include nickel, manganese, and/or the like that flow in from the core in addition to cobalt and zirconium due to diffusion or other effects during the preparing process. However, the coating layer may be a layer that contains cobalt and zirconium in the largest amount and has them as its main or predominant components.

As an example, the thickness of the coating layer may be about 5 nm to about 500 nm, for example, about 10 nm to about 300 nm or about 50 nm to about 200 nm. Within the foregoing ranges, the coating layer may achieve or provide the effect of improving or enhancing cycle-life characteristics without acting or serving as resistance (e.g., electrical resistance) and reducing capacity (e.g., electrical capacity). In one or more embodiments, the thickness of the coating layer may be measured, for example, through SEM, TEM, time-of-flight secondary ion mass spectrometry (TOF-SIMS), X-ray photoelectron spectroscopy (XPS), and/or energy dispersive X-ray spectroscopy (EDS) analysis, and as an example, may be measured through EDS line profile analysis of a cross-section of the positive electrode active material.

In one or more embodiments, the cobalt content (e.g., amount) of the coating layer may be about 0.5 mol% to about 5 mol%, for example, about 0.7 mol% to about 4 mol%, about 0.8 mol% to about 3 mol%, or about 1 mol% to about 2 mol%, based on 100 mol% of total metals excluding lithium in the positive electrode active material. Within the foregoing ranges, the coating layer may effectively or suitably perform the role of improving or enhancing cycle-life characteristics without acting or serving as an electrical resistance and without reducing the capacity (e.g., electrical capacity).

For example, the zirconium content (e.g., amount) of the coating layer may be about 0.1 mol% to about 3 mol%, for example, about 0.2 mol% to about 2 mol% or about 0.3 mol% to about 1 mol% based on 100 mol% of total metals excluding lithium in the positive electrode active material. Within the foregoing ranges, the coating layer may improve or enhance the life characteristics without acting or serving as an electrical resistance and without reducing the capacity (e.g., electrical capacity).

In one or more embodiments, in the coating layer, a molar ratio (W_{zr}/W_{co}) of the zirconium content (e.g., amount) (W_{zr}) to the cobalt content (e.g., amount) (W_{co}) may be about 1.1 to about 10, for example, about 1.5 to about 9, about 2 to about 8, or about 5 to about 7. Within the foregoing ranges, the effects of adding cobalt and zirconium to the coating layer may be harmonized with or synergized by each other.

### Method of Preparing Positive Electrode Active Material

In one or more embodiments, a method of preparing a positive electrode active material includes (i) performing a co-precipitation reaction in which a mixture of a nickel precursor and a metal precursor is maintained at about pH 11 to about pH 12 for greater than or equal to 30 hours to prepare a nickel-based composite hydroxide, (ii) mixing the nickel-based composite hydroxide, anhydrous lithium hydroxide, an aluminium raw material, and a zirconium raw material and subjecting to a first heat treatment to obtain secondary particles including a layered lithium nickel-based composite oxide and made by agglomerating a plurality of primary particles, (iii) pulverizing the secondary particles, and (iv) adding and mixing the pulverized resultant, a cobalt coating material, and a zirconium coating material into an aqueous (e.g., water-soluble) solvent, and then performing a second heat treatment to obtain a positive electrode active material.

The foregoing preparation method relates to a method to prepare a positive electrode active material as described in one or more embodiments. According to the preparation method, a high-nickel positive electrode active material in the form of single particles may be manufactured at a relatively low firing temperature and in a relatively simple manner without adding an alkaline particle growth accelerator, so that productivity and cost-effectiveness may be improved or enhanced.

In the preparation method according to one or more embodiments, if (e.g., when) the nickel-based composite hydroxide and a lithium raw material (e.g. anhydrous lithium hydroxide) are mixed and heat-treated, an aluminium raw material and a zirconium raw material are added together (e.g., sequentially or concurrently) and fired. At this time, it is understood that the aluminium raw material and the zirconium raw material may act or serve as a dopant and at the same time (e.g., concurrently) may act or serve as a grain growth accelerator. If (e.g., when) the aluminium raw materials and the zirconium raw materials are added, this addition may promote or enhance grain growth, making the synthesis of single particles at a lower temperature more effective or suitable than the generally used or generally available synthesis method for single particles, and thus, agglomeration or aggregation (e.g., a degree or occurrence of agglomeration or aggregation) of particles may be suppressed or reduced and productivity may be improved or enhanced. The alkaline particle growth accelerators and/or the alkaline particle growth fluxes that are generally available or generally used may have the problem with them remaining after firing, which may act or serve as resistance (e.g., electrical resistance) within the positive electrode, thereby reducing the cycle-life. However, in one or more embodiments, by using the aluminium raw material and the zirconium raw material as dopants for the positive electrode active material, they may not remain on the surface of the positive electrode active material particles, and thus the life characteristics may be improved or enhanced.

Hereinafter, the method of preparing the positive electrode active material will be described in more detail.

The nickel-based composite hydroxide may be a precursor of core particles in a positive electrode active material and may be synthesized through a co-precipitation reaction. In the co-precipitation reaction, the nickel precursor may be a hydroxide, an oxide, a nitrate, a sulfate, a carbonate, and/or a (e.g., any suitable) combination thereof of nickel. The metal precursor may be a hydroxide, an oxide, a nitrate, a sulfate, a carbonate, and/or a (e.g., any suitable) combination thereof containing a metal. In one or more embodiments, the metal of the metal precursor may be at least one selected from among B, Ba, Ca, Ce, Co, Cr, Cu, Fe, Mg, Mn, Mo, Nb, Si, Sn, Sr, Ti, V, W, Y, and Zn.

In one or more embodiments, in the co-precipitation reaction, in addition to the nickel precursor and the metal precursor, a complexing agent and/or a pH adjuster may be used. The complexing agent may be to control a reaction rate of precipitate formation in the co-precipitation reaction and may include, for example, ammonium hydroxide (NH₄OH), citric acid, and/or a (e.g., any suitable) combination thereof. A concentration of complexing agent may be about 0.1 *M* to about 1.5 *M*, for example, about 0.1 *M* to about 1.4 *M* or about 0.5 *M* to about 1.4 *M.* The pH adjuster may act or serve to control the pH of the reactant and may include, for example, sodium hydroxide (NaOH), sodium carbonate (Na₂CO₃), sodium oxalate (Na₂C₂O₄), and/or a (e.g., any suitable) combination thereof.

The co-precipitation reaction is performed at about pH 11 to about pH 12 for greater than or equal to about 30 hours. If (e.g., when) the foregoing ranges are satisfied, the nickel-based composite hydroxide obtained by the co-precipitation reaction may have a dense (e.g., substantially dense) form. In one or more embodiments, the co-precipitation reaction may proceed in one step (e.g., act or task) that is maintained in the pH range as described in one or more embodiments for greater than or equal to about 30 hours. For example, the co-precipitation reaction may proceed at about pH 11.5 to about pH 12, about pH 11.6 to about pH 11.9, or pH about 11.7 to about pH 11.8, and may proceed for about 30 hours to about 50 hours, about 32 hours to about 45 hours, or about 35 hours to about 40 hours.

The nickel-based composite hydroxide may be represented, for example, by Chemical Formula 11.

Chemical Formula 11 Niₓ₁₁M¹_{y11}(OH)₂

In Chemical Formula 11, 0.6≤x11≤1, 0≤y11≤0.4, 0.9≤x11+y11≤1.1, and M¹ may be one or more elements selected from among B, Ba, Ca, Ce, Co, Cr, Cu, Fe, Mg, Mn, Mo, Nb, Si, Sn, Sr, Ti, V, W, Y, and Zn.

In Chemical Formula 11, for example, 0.7≤x11≤1, 0≤y11≤0.3, or 0.8≤x11≤1, 0≤y11≤0.2, or 0.9≤x11<1, 0<y11≤0.1.

The nickel-based composite hydroxide may be represented by the Chemical Formula 12 as an example.

Chemical Formula 12 Niₓ₁₂Coᵥ₁₂M²_{y12}(OH)₂

In Chemical Formula 12, 0.6≤x12<1, 0<v12≤0.4, 0≤y12≤0.4, and 0.9≤x12+v12+y12≤1.1, and M² may be one or more elements selected from among B, Ba, Ca, Ce, Cr, Cu, Fe, Mg, Mn, Mo, Nb, Si, Sn, Sr, Ti, V, W, Y, and Zn.

The nickel-based composite hydroxide may be in the form of particles and may have a dense (e.g., substantially dense) structure. If (e.g., when) the foregoing conditions are satisfied, core particles in the form of single particles with excellent or suitable structural stability may be effectively obtained. For example, the average particle diameter (D₅₀) of the nickel-based composite hydroxide may be about 10 µm to about 20 µm, for example, about 10 µm to about 18 µm or about 12 µm to about 16 µm. In one or more embodiments, the average particle diameter (D₅₀) may be measured through SEM images. The nickel-based composite hydroxide may be a large particle, for example, a large particle precursor.

For example, the nickel-based composite hydroxide may be amorphous (e.g., non-crystalline), which may be confirmed through X-ray diffraction analysis.

Next, (ii) the nickel-based composite hydroxide, anhydrous lithium hydroxide, an aluminium raw material, and a zirconium raw material are mixed and subjected to a first heat treatment. Through this process, secondary particles including the layered lithium nickel-based composite oxide and formed (or provided) by agglomerating a plurality of primary particles may be prepared.

As an example, in the process (ii) according to one or more embodiments, a lithium content (e.g., amount) of anhydrous lithium hydroxide may be about 0.9 parts by mole to about 1.2 parts by mole, for example, about 0.9 parts by mole to about 1.1 parts by mole or about 0.9 parts by mole to about 1.05 parts by mole, for example, greater than about 1 part by mole and less than about 1.1 parts by mole, for example, about 1.01 parts by mole to about 1.04 parts by mole based on 1 part by mole of the total metal of the nickel-based composite hydroxide, aluminium of the aluminium raw material, and zirconium of the zirconium raw material. By appropriately or suitably controlling the molar ratio of lithium raw materials, core particles in the form of single particles with a stable (e.g., substantially stable) structure and good or suitable quality may be effectively prepared.

In process (ii) according to one or more embodiments, anhydrous lithium hydroxide is used as a lithium raw material. By using anhydrous lithium hydroxide as a lithium raw material, the loading amount may be increased, contributing to the improvement or enhancement of production per hour.

For example, the anhydrous lithium hydroxide (LiOH) may be prepared by drying hydrated lithium hydroxide (LiOH·H₂O) with an average particle diameter (D₅₀) of about 400 µm to about 600 µm and pulverizing it into an average particle diameter (D₅₀) of about 3 µm to about 30 µm. The anhydrous lithium hydroxide may not be pulverized before the drying but just once pulverized for about 1 minute after the drying. The drying may be, for example, performed under a vacuum condition within a temperature range of about 50 °C to about 200 °C for about 0.5 hours to about 20 hours.

The method of preparing the anhydrous lithium hydroxide may allow to easily obtain an anhydrous lithium salt, maintain an optimal or suitable process condition, and reduce a conversion rate to Li₂CO₃ to about 5% or less, obtaining high-purity anhydrous lithium hydroxide. After pulverizing the anhydrous lithium hydroxide, because fluidity of the powder rapidly decreases, it may be generally difficult to perform an additional process. For example, if (e.g., when) drying is performed after the pulverizing, the fine particles may be entangled with each other and tightly agglomerated by heat generated during the drying, which may need a re-pulverizing process, but the agglomerated particles may be more difficult to grind due to their relatively high agglomeration strength in the re-pulverizing process. In one or more embodiments, as the number of processes increases, the conversion rate to Li₂CO₃ may also increase due to an increase in the specific surface area, failing to obtain high-quality anhydrous lithium hydroxide. However, the method of preparing anhydrous lithium hydroxide according to one or more embodiments, in which the anhydrous lithium hydroxide is once pulverized into a specific size under a set or predetermined condition after the drying, may be a relatively simple process to obtain high-quality anhydrous lithium hydroxide, and also, additional processes may be easily added thereto.

In one or more embodiments, if (e.g., when) anhydrous lithium hydroxide, instead of hydrated lithium hydroxide, is used as a lithium raw material, the amount of unnecessary or undesirable gas and/or moisture generated during the heat treatment may be reduced, thereby improving or enhancing processability and enhancing the quality of the positive electrode active material. In one or more embodiments, there may be no input of unnecessary or undesirable heavy substances, such as H₂O and/or the like, increasing a heat treatment yield and improving or enhancing productivity.

The average particle diameter (D₅₀) of the hydrated lithium hydroxide, which is a starting material, may be, for example, about 450 µm to about 550 µm or about 480 µm to about 500 µm, but the obtained anhydrous lithium hydroxide may have an average particle diameter (D₅₀) of about 3 µm to about 25 µm or about 5 µm to about 20 µm. In one or more embodiments, the average particle diameter (D₅₀) of the obtained anhydrous lithium hydroxide may be smaller than that of the hydrated lithium hydroxide.

In one or more embodiments, based on 100 mol% of total metals of the nickel-based composite hydroxide, aluminium of the aluminium raw material, and zirconium of the zirconium raw material, an aluminium content (e.g., amount) of the aluminium raw material may be about 0.8 mol% to about 1.5 mol%, for example, about 0.8 mol% to about 1.4 mol%, about 0.8 mol% to about 1.3 mol%, or about 0.9 mol% to about 1.2 mol%.

For example, based on 100 mol% of total metals of the nickel-based composite hydroxide, aluminium of the aluminium raw material, and zirconium of the zirconium raw material, a zirconium content (e.g., amount) of the zirconium raw material may be about 0.1 mol% to about 0.3 mol%, for example, about 0.1 mol% to about 0.2 mol%.

In one or more embodiments, based on 100 mol% of total metals of the nickel-based composite hydroxide, aluminium of the aluminium raw material, and zirconium of the zirconium raw material, the molar ratio (Al/Zr) of the aluminium content (e.g., amount) of the aluminium raw material to the zirconium content (e.g., amount) of the zirconium raw material may be greater than or equal to about 5, for example, about 5 to about 20, about 5 to about 15, or about 5 to about 10.

It is understood that the aluminium raw material and the zirconium raw material according to one or more embodiments may act or serve as raw materials for dopants and at the same time (e.g., concurrently) may play the role of grain growth accelerators, and by adding each in the foregoing content (e.g., amount) ranges, single particles in an optimal or suitable state may be obtained in the form of core particles.

The aluminium raw material may be aluminium oxide, for example, Al₂O₃. In one or more embodiments, the zirconium raw material may be zirconium oxide, for example, ZrO₂.

The method of preparing a positive electrode active material according to one or more embodiments may enable heat treatment (e.g., first heat treatment) at a lower temperature than the synthesis methods that are generally available or generally used for single particles. For example, even if heat treatment is performed at a relatively low temperature, this process may allow to obtain desired good or suitable single particles as the core particles of the positive electrode active material. Accordingly, the process may become simpler, economic efficiency may improve or enhance, particle agglomeration problems may be reduced, and productivity and processability may be improved or enhanced.

For example, the first heat treatment may be performed in an oxidizing gas atmosphere, and air and/or oxygen may be used as the oxidizing gas. For example, the first heat treatment may be performed in an air atmosphere or an atmosphere including greater than or equal to about 50 volume%, greater than or equal to about 60 volume%, greater than or equal to about 80 volume%, or greater than or equal to about 90 volume% of oxygen.

In one or more embodiments, the first heat treatment may be performed at a temperature of, for example, less than or equal to about 900 °C, less than or equal to about 890 °C, less than or equal to about 850 °C, or less than or equal to about 810 °C, for example, about 700 °C to about 900 °C, about 710 °C to about 890 °C, about 730 °C to about 850 °C, or about 750 °C to about 810 °C. The first heat treatment may be performed for, for example, about 4 hours to about 20 hours, about 5 hours to about 15 hours, about 6 hours to about 12 hours, or about 8 hours to about 10 hours.

In the method of preparing a positive electrode active material according to one or more embodiments, an alkaline grain growth accelerator and/or an alkaline grain growth flux may not be added during the process of mixing the nickel-based composite hydroxide, the lithium raw material, the aluminium raw material, and the zirconium raw material and performing the heat treatment. Accordingly, the increase in resistance (e.g., electrical resistance) due to residue after heat treatment may be prevented or reduced, the cycle-life characteristics of a rechargeable lithium battery may be improved or enhanced, and the process and economy may be improved or enhanced without adding a process for removing residue.

Through the first heat treatment, secondary particles including a layered lithium nickel-based composite oxide and formed by agglomeration of a plurality of primary particles may be obtained. At this time, the plurality of primary particles constituting the secondary particles may have sufficiently or suitably grown into single crystals by the input of aluminium raw materials and zirconium raw materials, and the secondary particles may have a dense (e.g., substantially dense) structure, and thereby core particles with excellent or suitable structural stability may be effectively obtained.

In one or more embodiments, the secondary particles may be large (e.g., substantially large) particles, and by using the precursors of these large particles to proceed with the process as described in one or more embodiments, the hardness of the cake produced during the preparing process may be relatively low, making it relatively easy to pulverize and improving or enhancing productivity per hour.

For example, the average particle diameter (D₅₀) of the secondary particles may be about 10 µm to about 20 µm, for example, about 10 µm to about 18 µm or about 12 µm to about 16 µm. The average particle diameter (D₅₀) of the secondary particles may be measured through SEM images.

The average particle diameter (D₅₀) of the primary particles constituting (forming) the secondary particles may be about 1 µm to about 4 µm, for example, about 1.5 µm to about 4 µm, about 2 µm to about 4 µm, or about 2 µm to about 3.5 µm. The average particle diameter (D₅₀) of the primary particles may be measured through SEM images of the surfaces of the secondary particles. The secondary particles may be composed of a plurality of primary particles and pores between the primary particles, and may have a dense (e.g., substantially dense) structure rather than a hollow (e.g., substantially hollow) structure.

The obtained layered lithium nickel-based composite oxide may be represented by Chemical Formula 1, and the description of Chemical Formula 1 is as described in one or more embodiments.

Then, (iii) the obtained secondary particles are pulverized. In process (iii) as described in one or more embodiments, pulverization of secondary particles refers to breaking the secondary particles, and may be a process in which the plurality of primary particles forming the secondary particles are separated from each other to become single particles. Through the pulverizing process, core particles of the positive electrode active material in the form of single particles may be obtained.

According to the foregoing preparation method, if (e.g., when) the nickel-based composite hydroxide and the lithium raw materials are mixed and treated by heat, the aluminium raw material and the zirconium raw material may be added together and treated by heat, so that primary particles may be single particles of sufficient or suitable size at a relatively low temperature of 900 °C or lower, secondary particles in which these primary particles are agglomerated may be obtained, and by pulverizing them, the desired or suitable single particle form may be obtained as the core particles of the positive electrode active material.

The pulverizing may be carried out using a jet mill and/or an air flow classifying mill (ACM) equipment. If (e.g., when) pulverizing is performed with a jet mill, the air pressure may be appropriately or suitably adjusted so that the bulk density of the pulverized product may be about 0.2 g/cm³ to 0.5 g/cm³, and may be, for example, adjusted to be about 2 bar to about 8 bar or about 4 bar to about 6 bar. The pulverizing process may be carried out for, for example, about 10 minutes to about 120 minutes, for example, about 10 minutes to about 80 minutes, about 10 minutes to about 60 minutes, or about 20 minutes to about 50 minutes.

Thereafter, (iv) the pulverized resultant, the cobalt coating material, and the zirconium coating material are added and mixed in an aqueous (e.g., water-soluble) solvent and then subjected to a second heat treatment to obtain a positive electrode active material. For example, the cobalt coating material may be a hydroxide, an oxide, a nitrate, a sulfate, a carbonate, and/or a (e.g., any suitable) combination thereof including cobalt. For example, the zirconium coating material may be a hydroxide, an oxide, a nitrate, a sulfate, a carbonate, and/or a (e.g., any suitable) combination thereof including zirconium.

As an example, the aqueous (e.g., water-soluble) solvent may be a solvent that is generally available or generally used, and may include, for example, water, distilled water, an alcohol-based solvent, and/or a (e.g., any suitable) combination thereof.

In one or more embodiments, the method may further include adding and mixing the pulverized resultant, the cobalt coating material, and the zirconium coating material, and then drying them before performing the second heat treatment. For example, drying performed before the second heat treatment may be performed at about 80 °C to about 300 °C, about 90 °C to about 250 °C, about 100 °C to about 200 °C, about 150 °C to about 200 °C, or about 180 °C to about 200 °C.

For example, the second heat treatment may be performed in an oxidizing gas atmosphere, and air or oxygen may be used as the oxidizing gas. For example, the second heat treatment may be performed in an air atmosphere or an atmosphere including greater than or equal to about 50 volume% of oxygen.

In one or more embodiments, a first oxidizing gas atmosphere may be utilized for the first heat treatment and a second oxidizing gas atmosphere may be utilized for the second heat treatment. The first oxidizing gas atmosphere and the second oxidizing gas atmosphere may be substantially same. The first oxidizing gas atmosphere and the second oxidizing gas atmosphere may be substantially different. The first oxidizing gas atmosphere and the second oxidizing gas atmosphere each may be suitably adjusted or modified.

In one or more embodiments, the second heat treatment may be performed at about 500 °C to about 900 °C, about 600 °C to about 800 °C, or about 650 °C to about 750 °C. The second heat treatment may be performed in an oxidizing gas atmosphere, for example, for about 8 hours to about 20 hours, about 10 hours to about 18 hours, or about 12 hours to about 16 hours. If (e.g., when) the foregoing conditions are satisfied, a positive electrode active material with better or more suitable surface stability and improved or enhanced cycle-life characteristics may be effectively prepared.

Through this process, the positive electrode active material may be obtained.

In the method of preparing the positive electrode active material according to one or more embodiments, the cobalt content (e.g., amount) of the cobalt coating material may be adjusted to about 0.5 mol% to about 5 mol%, for example, about 0.7 mol% to about 4 mol%, about 0.8 mol% to about 3 mol%, or about 1 mol% to about 2 mol%, based on 100 mol% of total metals excluding lithium in the finally obtained positive electrode active material. Within the foregoing ranges, the coating layer may effectively implement or perform the role of improving or enhancing the cycle-life characteristics without acting or serving as an electrical resistance and without reducing the capacity (e.g., electrical capacity).

In the method of preparing the positive electrode active material according to one or more embodiments, a zirconium content (e.g., amount) of the zirconium coating material may be adjusted to about 0.1 mol% to about 3 mol%, for example, about 0.2 mol% to about 2 mol% or about 0.3 mol% to about 1 mol% based on 100 mol% of total metals excluding lithium in the finally obtained positive electrode active material. Within the foregoing ranges, the coating layer may improve or enhance the cycle-life characteristics without acting or serving as an electrical resistance and without reducing the capacity (e.g., electrical capacity).

### Rechargeable Lithium Battery

In one or more embodiments, the rechargeable lithium battery may include a positive electrode; a negative electrode; and an electrolyte, wherein the positive electrode may include a positive electrode current collector; and a positive electrode active material layer provided on the positive electrode current collector and including a positive electrode active material prepared by the preparation method as described in one or more embodiments.

In one example, the rechargeable lithium battery may include a positive electrode, a negative electrode, a separator between the positive electrode and the negative electrode, and an electrolyte solution.

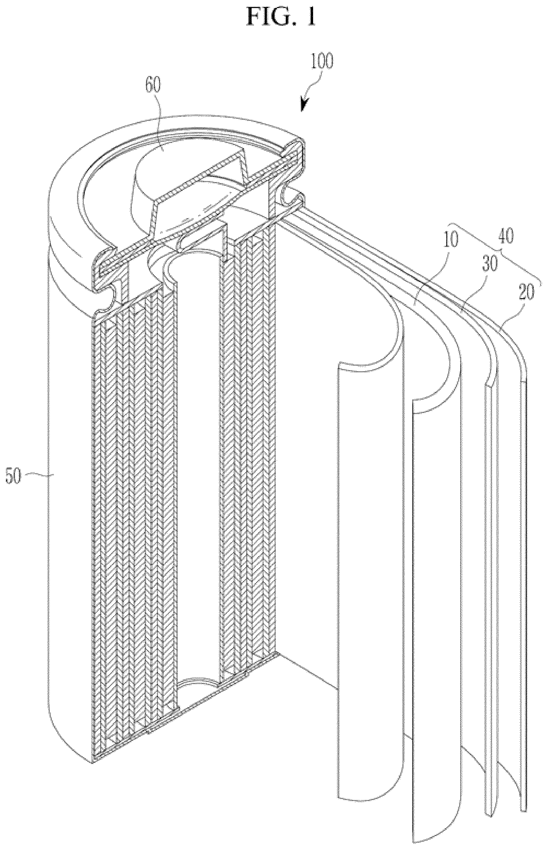

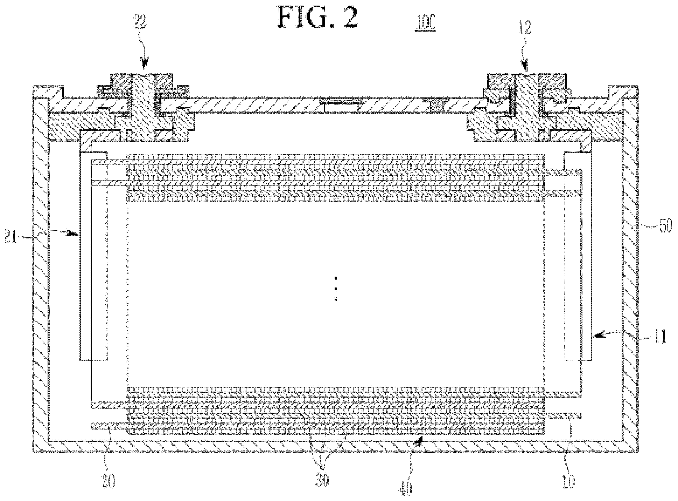

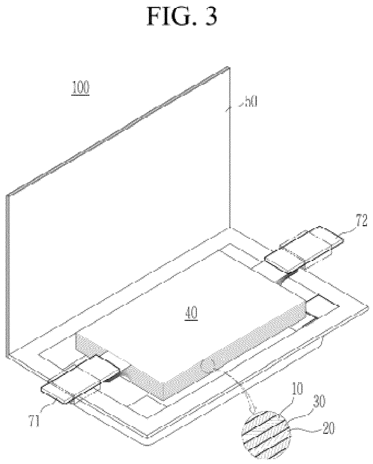

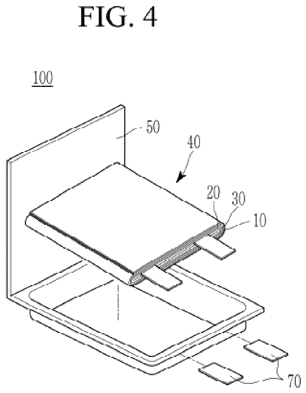

The rechargeable lithium battery may be classified into cylindrical, prismatic, pouch, coin, and/or the like depending on the shape. FIGS. 1 to 4 are schematic views each illustrating a rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative lead tab 21, and a negative electrode terminal 22. As illustrated in FIGS. 3 and 4, the rechargeable lithium battery 100 may include an electrode tab 70, for example, a positive electrode tab 71 and a negative electrode tab 72 acting or serving as an electrical path to introduce the current in the electrode assembly 40 to the outside.

### Positive Electrode

The positive electrode may include a positive electrode current collector; and a positive electrode active material layer on the positive electrode current collector. The positive electrode active material layer may optionally further include a binder, a conductive (e.g., electrically conductive) material, and/or a (e.g., any suitable) combination thereof.

### Positive Electrode Active Material

The positive electrode active material may be a compound (a lithiated intercalation compound) capable of reversibly intercalating and deintercalating lithium, and the positive electrode active material as described in one or more embodiments in relation to the method of preparing the positive electrode active material may be used.

### Binder

The binder may improve or enhance binding properties of the positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

### Conductive Material

The conductive material (e.g., electron conductor) may be included to provide electrode conductivity, and any suitable electrically conductive material may be used as a conductive material unless it causes a chemical change (e.g., an undesirable chemical change). Examples of the conductive (e.g., electrically conductive) material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; and/or a (e.g., any suitable) mixture thereof.

Each content (e.g., amount) of the binder and the conductive (e.g., electrically conductive) material may be about 0.5 wt% to about 5 wt% based on 100 wt% of the positive electrode active material layer.

The positive electrode current collector may include aluminium (Al), but embodiments of the present disclosure are not limited thereto.

### Negative Electrode

The negative electrode may include a negative electrode current collector; and a negative electrode active material layer on the negative electrode current collector, wherein the negative electrode active material layer may include a negative electrode active material, and may further include a binder, a conductive (e.g., electrically conductive) material, and/or a (e.g., any suitable) combination thereof.

An amount of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive (e.g., electrically conductive) material.

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous (e.g., non-crystalline) carbon, and/or a (e.g., any suitable) combination thereof as a carbon-based negative electrode active material. The crystalline carbon may be irregular (e.g., amorphous), and/or sheet (e.g., substantially sheet), flake (e.g., substantially flake), spherical (e.g., substantially spherical), or fiber shaped (e.g., in a form of fibers) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ(0<x≤2), a Si-Q alloy (wherein Q may be an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, Mg, Ca, Sr, Ba, Ra, scandium (Sc), yttrium (Y), Ti, Zr, hafnium (Hf), rutherfordium (Rf), vanadium (V), Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (TI), Ge, P, arsenic (As), Sb, bismuth (Bi), S, selenium (Se), tellurium (Te), polonium (Po), and/or a (e.g., any suitable) combination thereof), and/or a (e.g., any suitable) combination thereof. The Sn-based negative electrode active material may be Sn, SnOₖ(0<k≤2) (e.g., SnO₂), a Sn alloy, and/or a (e.g., any suitable) combination thereof.

The silicon-carbon composite may be a composite of silicon and amorphous (e.g., non-crystalline) carbon. An average particle diameter (D₅₀) of the silicon-carbon composite particles may be, for example, about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous (e.g., non-crystalline) carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, and/or a (e.g., any suitable) combination thereof. The amorphous (e.g., non-crystalline) carbon may include a soft carbon and/or a hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be about 10 wt% to about 50 wt% and a content (e.g., amount) of amorphous (e.g., non-crystalline) carbon may be about 50 wt% to about 90 wt% based on 100 wt% of the silicon-carbon composite. In one or more embodiments, if (e.g., when) the composite includes silicon, amorphous (e.g., non-crystalline) carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous (e.g., non-crystalline) carbon may be about 20 wt% to about 40 wt% based on 100 wt% of the silicon-carbon composite.

In one or more embodiments, a thickness of the amorphous (e.g., non-crystalline) carbon coating layer may be about 5 nm to about 100 nm. An average particle diameter (D₅₀) of the silicon particles (primary particles) may be about 10 nm to about 1 µm or about 10 nm to about 200 nm. The silicon particles may exist as silicon alone, in the form of a silicon alloy and/or in an oxidized form. The oxidized form of silicon may be represented by SiOₓ(0<x≤2). In one or more embodiments, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, the mixing ratio may be a weight ratio of about 1:99 to about 90:10.

### Binder

The binder may act or serve to well or suitably adhere the negative electrode active material particles to each other and also to adhere the negative electrode active material to the current collector. The binder may be a non-aqueous (e.g., water-insoluble) binder, an aqueous (e.g., water-soluble) binder, a dry (e.g., substantially dry) binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of imparting or increasing viscosity may be further included. As the cellulose-based compound, one or more selected from among carboxymethyl cellulose, hydroxypropyl methyl cellulose, methyl cellulose, or alkali metal salts thereof may be mixed and used. The alkali metal may be sodium (Na), potassium (K), and/or lithium (Li).

The dry binder may be a polymer material capable of becoming fiber (e.g., processable to become fiber), and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Electrolyte

For example, the electrolyte for a rechargeable lithium battery may be an electrolyte solution, which may include a non-aqueous (e.g., water-insoluble) organic solvent and a lithium salt.

The non-aqueous (e.g., water-insoluble) organic solvent may act or serve as a medium to transmit ions taking part in the electrochemical reaction of a rechargeable lithium battery. The non-aqueous (e.g., water-insoluble) organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, an ether group, and/or the like); amides, such as dimethylformamide; dioxolanes, such as 1,3-dioxolane, 1,4-dioxolane, and/or the like; sulfolanes, and/or the like.

The non-aqueous (e.g., water-insoluble) organic solvent may be used alone or in a mixture of two or more types or kinds, and if (e.g., when) two or more types or kinds are used in a mixture, a mixing ratio may be appropriately or suitably adjusted according to the desired or suitable battery performance, which is generally used by or generally available to those working in the field.

If (e.g., when) a carbonate-based solvent is used, a cyclic carbonate and a chain (e.g., non-cyclic) carbonate may be mixed and used, and the cyclic carbonate and the chain (e.g., non-cyclic) carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, and/or an ethylene carbonate-based compound to improve or enhance rechargeable lithium battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of the lithium salt may be within the range of about 0.1 *M* to about 2.0 *M.* If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

### Separator

Depending on the type or kind of the rechargeable lithium battery, a separator may be between the positive electrode and the negative electrode. The separator may include polyethylene, polypropylene, polyvinylidene fluoride, and/or a multilayer film of two or more layers thereof, and/or a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one surface or both surfaces (e.g., two opposite (or opposite facing) surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyaryletherketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., Teflon^{™}), and/or a copolymer or (e.g., any suitable) mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and a second structural unit including at least one selected from among a structural unit derived from (meth)acrylic acid or (meth)acrylate and a structural unit derived from (meth)acrylamido sulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm or about 1 µm to about 5 µm.

Examples and Comparative Examples of the present disclosure are described in more detail. However, the following examples are only examples of the present disclosure, and embodiments of the present disclosure are not limited to the following examples.

### Example 1

### 1. Preparation of Positive Electrode Active Material

### (1) Preparation of Nickel-based Composite Hydroxide

Nickel-based composite hydroxides were prepared through the following co-precipitation method. A mixed solution of metal raw materials was prepared by dissolving nickel sulfate, cobalt sulfate, and manganese sulfate in distilled water as a solvent so that the molar ratio of Ni:Co:Mn=95:4:1. A diluted ammonia water (NH₄OH) solution was prepared as a complex agent and sodium hydroxide (NaOH) as a pH adjuster. A concentration of ammonia water was 10 wt%, and a concentration of sodium hydroxide was 20 wt%. The prepared metal raw material mixture solution, ammonia water, and sodium hydroxide were each injected into the reactor.

Nickel-based composite hydroxide was synthesized by stirring for 37 hours at a pH of 11.75 inside the reactor.

The slurry solution in the reactor was filtered, washed with distilled water with high purity, and dried in a hot air oven at 180 °C for 24 hours to obtain the nickel-based composite hydroxide (Ni_{0.95}Co_{0.04}Mn_{0.01}(OH)₂). The obtained nickel-based composite hydroxide was in the form of secondary particles formed by agglomeration of a plurality of primary particles, wherein the secondary particles had an average particle diameter (D₅₀) of about 15 µm, when measured through an SEM image.

### (2) Preparation of Positive Electrode Active Material

The obtained nickel-based composite hydroxide was mixed with anhydrous lithium hydroxide, Al₂O₃, and ZrO₂. The anhydrous lithium salt was mixed so that a molar ratio of lithium to the total metal of the nickel-based composite hydroxide was 1.05. Also, Al₂O₃ was added, so that Al of Al₂O₃ became 1 mol% based on 100 mol% of the total metal of the nickel-based composite hydroxide, Al of Al₂O₃ and Zr of ZrO₂, and ZrO₂ was added, so that Zr of ZrO₂ became 0.1 mol% based on 100 mol% of the total metal of the nickel-based composite hydroxide, Al of Al₂O₃ and Zr of ZrO₂.

This mixture was heat-treated at 810 °C for 8 hours under an atmosphere including 90 volume% of oxygen. A product obtained from the first heat treatment had a composition of Li_{1.00}Ni_{0.939}Co_{0.04}Mn_{0.01}Al_{0.01}Zr_{0.001}O₂, and was confirmed to be in the form of secondary particles when observed through a SEM image. The average particle diameter (D₅₀) of the secondary particles, as measured through SEM images, was approximately 15 µm, and the average particle diameter (D₅₀) of the primary particles forming the secondary particles was approximately 3 µm.

The product obtained from the first heat treatment was pulverized for 20 minutes with a jet mill at an air pressure of about 5 bars, and when examined through an SEM image, the pulverized resultant was confirmed to be single particles with an average particle diameter of about 3 µm.

The pulverized resultant was washed by adding to a distilled water solvent and coated with cobalt and zirconium by adding Co(OH)₂ and ZrO₂ and mixing them. Thereafter, the distilled water was removed, dried at 190 °C, and then a second heat treatment was performed at 710 °C for 12 hours in an atmosphere including 50 volume% of oxygen to obtain a positive electrode active material having a core of single particles and a coating layer including Co and Zr and having a thickness of 50 nm on the core of the single particles. At this time, the cobalt content (e.g., amount) of the coating layer was designed to be 2 mol% based on 100 wt% of the total metal excluding lithium in the final obtained positive electrode active material, and the Zr content (e.g., amount) of the coating layer was designed to be 0.3 mol% based on 100 wt% of the total metal excluding lithium in the final positive electrode active material.

To summarize, in Example 1, nickel-based composite hydroxides were prepared using a co-precipitation method. A mixed solution of nickel sulfate, cobalt sulfate, and manganese sulfate was dissolved in distilled water, with ammonia water and sodium hydroxide used as a complex agent and pH adjuster, respectively. The mixture was stirred for 37 hours at a pH of 11.75, then filtered, washed, and dried to obtain nickel-based composite hydroxide in the form of secondary particles with an average diameter of about 15 µm.

The nickel-based composite hydroxide was then mixed with anhydrous lithium hydroxide, Al₂O₃, and ZrO₂, and heat-treated at 810 °C for 8 hours in an oxygen-rich atmosphere. The resulting product, with a composition of Li_{1.00}Ni_{0.939}Co_{0.04}Mn_{0.01}Al_{0.01}Zr_{0.001}O₂, was pulverized to form single particles with an average diameter of about 3 µm. These particles were washed, coated with Co(OH)₂ and ZrO₂, dried, and subjected to a second heat treatment at 710 °C, resulting in a positive electrode active material with a core of single particles and a Co and Zr coating layer 50 nm thick.

### 2. Manufacturing of Rechargeable Lithium Battery Cell

98.5 wt% of the manufactured positive electrode active material, 1.0 wt% of a polyvinylidene fluoride binder, and 0.5 wt% of a carbon nanotube conductive (e.g., electrically conductive) material were mixed to prepare a positive electrode active material layer slurry, and this positive electrode active material layer slurry was coated on an aluminium foil current collector to manufacture a positive electrode. The manufactured positive electrode contained the positive electrode active material in the form of pulverized single particles.

The positive electrode, a lithium counter electrode as a negative electrode, and a polytetrafluoroethylene separator therebetween were used to manufacture a structure, and after inserting the structure in a rechargeable lithium battery case, an electrolyte solution prepared by mixing ethylene carbonate and dimethyl carbonate in a volume ratio of 3:7 and dissolving 1 M LiPF₆ in the mixed solvent was injected thereinto to manufacture a rechargeable lithium battery half-cell in a method.

### Example 2

A positive electrode active material and a rechargeable lithium battery cell were manufactured in substantially the same manner as in Example 1 except that ZrO₂ was mixed so that Zr was 0.2 mol% based on 100 mol% of the total metal excluding lithium in the finally obtained positive electrode active material.

### Comparative Example 1

A positive electrode active material and a rechargeable lithium battery cell were manufactured in substantially the same manner as in Example 1 except that the positive electrode active material was prepared without mixing ZrO₂. In Comparative Example 1, because the primary particles forming the secondary particles were not single-crystallized to a sufficient size at the heat treatment of 810 °C, the secondary particles were not pulverized through the jet-milling process. Accordingly, comparing Example 1 and Example 2, when Al₂O₃ and ZrO₂ in each set or predetermined content (e.g., amount) were added in the first heat treatment under substantially the same temperature condition to proceed with Al and Zr doping, grain growth of core particles, that is, growth of the primary particles or singe crystallization of the primary particles were promoted.

### Comparative Example 2

A positive electrode active material and a rechargeable lithium battery cell were manufactured in substantially the same manner as in Example 1 except that the positive electrode active material was prepared by mixing ZrO₂, so that Zr became 0.3 mol% of based on 100 mol% of the total metal excluding lithium in the finally obtained positive electrode active material. Comparative Example 2 had an Al/Zr ratio of 3.33, which was less than 5.

### Comparative Example 3

A positive electrode active material and a rechargeable lithium battery cell were manufactured in substantially the same manner as in Example 1 except that when producing a nickel-based composite hydroxide, the pH condition was raised to 12.3 to obtain a nickel-based composite hydroxide in the form of secondary particles having an average particle diameter (D₅₀) of about 3 µm, and secondary particles having an average particle diameter (D₅₀) of about 3 µm were obtained as small particles as a result of the first heat treatment.

### Comparative Example 4

A positive electrode active material and a rechargeable lithium battery cell were manufactured in substantially the same manner as in Example 1 except that when producing the positive electrode active material, cobalt coating was not performed because Co(OH)₂ was not mixed.

### Evaluation Example 1: Evaluation of Coating Layer Components

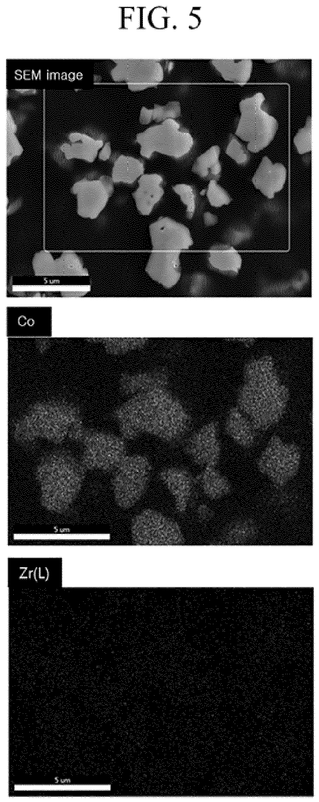

To evaluate the components in the coating layer of the positive electrode active material prepared in Example 1, SEM-EDS analysis was performed, and the results are illustrated in FIG. 5. Herein, the SEM-EDS was analyzed using Philips' FEI Titan 80-300 at an acceleration voltage of 15 kV.

Referring to FIG. 5, the coating layer provided on the surface of the positive electrode active material manufactured in Example 1 includes cobalt (Co) and zirconium (Zr).

### Evaluation Example 2: Evaluation of Cycle-life Characteristics

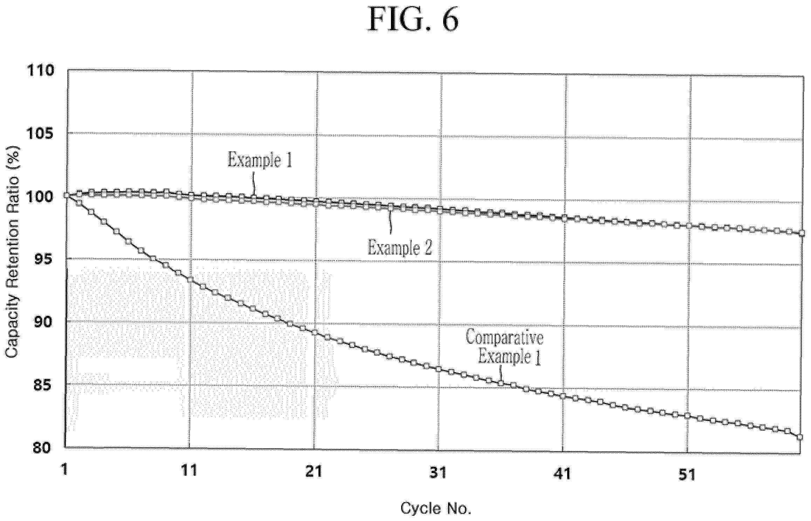

The rechargeable lithium battery cells according to Examples 1 and 2 and Comparative Example 1 were charged to 4.45 V to a constant current of 0.2 C and to 0.05 C at the constant voltage and then, discharged to 3.0 V at 0.2 C at 25 °C to proceed with initial charge and discharge. Subsequently, the cells were 61 times repeatedly charged and discharged at 1.0 C within a voltage range of 3.0 V to 4.45 V at 45 °C. A ratio of discharge capacity at each cycle to the initial discharge capacity is illustrated in FIG. 6.

Referring to FIG. 6, in Comparative Example 1, the capacity retention rate decreases as the cycle progresses because single crystallization does not proceed in the core particles of the positive electrode active material. In contrast, it can be seen that Examples 1 and 2 achieve excellent or suitable cycle-life characteristics.

### Evaluation Example 3: Evaluation of Loading Amount

A loading amount test was conducted using the positive electrode active material manufactured according to Example 1 and Comparative Example 3, and the test results are illustrated in Table 1.

**Table 1**

| | | Loading amount (kg) | 003 | 003/104 | 003/104 | Remarks |
|---|---|---|---|---|---|---|
| | | | FWHM | Area | FWHM | |
| Comparative Example 3 | Top when using small particles precursor | 4 | 0.121 | 1.19 | 0.88 | Inferior physical properties at the bottom |
| | Bottom when using small particles precursor | | 0.152 | 1.09 | 0.66 | |
| Example 1 | Top when using large particles precursor | 6 | 0.122 | 1.35 | 0.91 | Excellent physical properties |
| | Bottom when using large particle precursor | | 0.123 | 1.36 | 0.90 | |

Referring to the results in Table 1, when the positive electrode active material manufactured according to Comparative Example 3 was loaded, a large agglomeration of single particles was observed by using a small-particle precursor, separation of the top and bottom was observed, and a large agglomeration occurred, resulting in a difference in the XRD properties of the top and bottom.

In contrast, when the positive electrode active material prepared according to Example 1 was loaded, there was no separation between the top and bottom by using a large particle precursor during the preparing process, and that less agglomeration occurred, so that a substantially uniform positive electrode active material layer with little difference in the XRD properties of the top and bottom could be obtained.

### Evaluation Example 4: Evaluation of Charge and Discharge Efficiency

After the initial charge and discharge as in Evaluation Example 2, the rechargeable lithium battery cells of Example 1 and Comparative Examples 2 to 4 were subsequently 60 times charged and discharged at 1.0 C within a voltage range of 3.0 V to 4.45 V at 45 °C to measure charge capacity and discharge capacity and then, calculate a ratio of the latter to the former as efficiency, and the results are illustrated in Table 2.

**Table 2**

| | Charge capacity (mAh/g) | Discharge capacity (mAh/g) | Charge and discharge efficiency (%) |
|---|---|---|---|
| Example 1 | 235.8 | 204.5 | 86.7 |
| Comparative Example 2 | 235.0 | 202.0 | 85.9 |
| Comparative Example 3 | 235.1 | 201.6 | 85.8 |
| Comparative Example 4 | 235.6 | 202.2 | 85.8 |

Referring to Table 2, the case of using the positive electrode active material prepared by using a large particle precursor according to Example 1 exhibited excellent charge capacity and discharge capacity and the excellent charge/discharge efficiency.

In contrast, when the positive electrode active material prepared according to Comparative Example 2 was used, the initial charge/discharge capacity, efficiency, and cycle-life characteristics were reduced, and this is presumed to be due to the overgrowth of primary particles during the process of forming core particles. Also, the case of using the positive electrode active material prepared by using a small particle precursor according to Comparative Example 3 exhibited insufficient charge and discharge efficiency as well as slightly low charge capacity and discharge capacity. Also, when the positive electrode active material prepared according to Comparative Example 4 was used, the charge capacity, discharge capacity, and charge/discharge efficiency were somewhat low because cobalt was not included in the coating layer.

In the context of the present application and unless otherwise defined:

Single Particle Form: The single particle refers to an individual particle that exists alone without aggregation or agglomeration. This form has a monolithic structure, indicating that it is a single, unitary structure without grain boundaries. The single particle may be a single crystal or contain a few crystals, and it may exist as an independent phase where particles do not aggregate or not agglomerate with each other. In one or more embodiments, the single particle may include primary particles that are not aggregated or not agglomerated. The average particle diameter of the single particle may range from about 100 nm to about 4,000 nm (corresponding to about 0.1 µm to about 4 µm, respectively).

Secondary Particle Form: The secondary particle refers to a particle formed by the aggregation or agglomeration of multiple primary particles. This form has a polycrystal structure, indicating that it is composed of multiple primary particles aggregated or agglomerated together. The secondary particle may have a spherical (e.g., substantially spherical) or oval (e.g., substantially oval) shape and may include a coating layer that enhances structural stability and electrical conductivity. The average particle diameter of the secondary particle may range from about 3 µm to about 10 µm, with primary particles sized about 50 nm to about 200 nm.

In one or more embodiments, a single particle form refers to an individual, non-aggregated or non-agglomerated particle that may include primary particles (e.g., may be primary particles) and may have a random (e.g., amorphous) shape, while a secondary particle form may involve multiple primary particles aggregated or agglomerated together.

A battery manufacturing device, a battery management system (BMS) device, and/or any other relevant devices or components according to one or more embodiments of the present disclosure may be implemented utilizing any suitable hardware, firmware (e.g. an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device using a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that present disclosure is not limited to the disclosed embodiments. In contrast, it is intended to cover one or more suitable modifications and equivalent arrangements included within the scope of the appended claims and equivalents thereof. It therefore will be understood that one or more embodiments described above are just illustrative but not limitative in all aspects.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
core particles comprising a layered lithium nickel-based composite oxide and being in a single particle form; and
a coating layer provided on the surface of the core particles and comprising cobalt and zirconium;
wherein the lithium nickel-based composite oxide of the core particles comprises aluminium and zirconium, a nickel content is greater than or equal to about 60 mol%, an aluminium content is about 0.8 mol% to about 1.5 mol%, and a zirconium content is about 0.1 mol% to about 0.3 mol%, based on 100 mol% of total metals excluding lithium, and a molar ratio (Al/Zr) of aluminium content to zirconium content is greater than or equal to about 5.

2. The positive electrode active material as claimed in claim 1, wherein:
the lithium nickel-based composite oxide is represented by Chemical Formula 1:
Chemical Formula 1 Liₐ₁Niₓ₁M¹_{y1}Al_{z1}Zr_{w1}O_{2-b1}X_{b1}, and
wherein, in Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ is one or more elements selected from among B, Ba, Ca, Ce, Co, Cr, Cu, Fe, Mg, Mn, Mo, Nb, Si, Sn, Sr, Ti, V, W, Y, and Zn, and X is one or more elements selected from among F, P, and S.

3. The positive electrode active material as claimed in claim 1 or claim 2, wherein:
an average particle diameter of the core particles is about 1 µm to about 4 µm.

4. The positive electrode active material as claimed in any one of claims 1 to 3, wherein:
a thickness of the coating layer is about 5 nm to about 500 nm.

5. The positive electrode active material as claimed in any one of claims 1 to 4, wherein:
in the lithium nickel-based composite oxide, the nickel content is about 80 mol% to about 99 mol% based on 100 mol% of total metals excluding lithium.

6. The positive electrode active material as claimed in any one of claims 1 to 5, wherein:
in the positive electrode active material, a cobalt content of the coating layer is about 0.5 mol% to about 5 mol% based on 100 mol% of total metals excluding lithium.

7. The positive electrode active material as claimed in any one of claims 1 to 6, wherein:
in the positive electrode active material, a zirconium content of the coating layer is about 0.1 mol% to about 3 mol% based on 100 mol% of total metals excluding lithium.

8. A method of preparing a positive electrode active material comprising:
performing a co-precipitation reaction in which a mixture of a nickel precursor and a metal precursor is maintained at about pH 11 to about pH 12 for greater than or equal to 30 hours to prepare a nickel-based composite hydroxide,
mixing the nickel-based composite hydroxide, anhydrous lithium hydroxide, an aluminium raw material, and a zirconium raw material and subjecting to a first heat treatment to obtain secondary particles comprising a layered lithium nickel-based composite oxide and made by agglomerating a plurality of primary particles,
pulverizing the secondary particles, and
adding and mixing the pulverized resultant, a cobalt coating material, and a zirconium coating material into an aqueous solvent, and then performing a second heat treatment to obtain a positive electrode active material.

9. The method as claimed in claim 8, wherein:
(i) a metal of the metal precursor is one or more elements selected from among B, Ba, Ca, Ce, Co, Cr, Cu, Fe, Mg, Mn, Mo, Nb, Si, Sn, Sr, Ti, V, W, Y, and Zn; and/or
(ii) an aluminium content of the aluminium raw material is about 0.8 mol% to about 1.5 mol% and a zirconium content of the zirconium raw material is about 0.1 mol% to about 0.3 mol% based on 100 mol% of total metals of the nickel-based composite hydroxide, aluminium of the aluminium raw material, and zirconium of the zirconium raw material, and a molar ratio (Al/Zr) of the aluminium content to the zirconium content is greater than or equal to about 5.

10. The method as claimed in claim 8 or claim 9, wherein:
(i) the nickel-based composite hydroxide has an average particle diameter of about 10 µm to about 20 µm and is an amorphous state; and/or
(ii) the aluminium raw material is aluminium oxide, and
the zirconium raw material is zirconium oxide.

11. The method as claimed in any one of claims 8 to 10, wherein:
a cobalt content of the cobalt coating material is adjusted to about 0.5 mol% to about 5 mol%, and a zirconium content of the zirconium coating material is adjusted to about 0.1 mol% to about 3 mol%, based on 100 mol% of total metals excluding lithium in the finally obtained positive electrode active material.

12. The method as claimed in any one of claims 8 to 11, wherein:
the first heat treatment is performed at about 700 °C to about 900 °C for about 4 hours to about 20 hours in a first oxidizing gas atmosphere, and
the second heat treatment is performed at about 500 °C to about 900 °C for about 8 hours to about 20 hours in a second oxidizing gas atmosphere.

13. The method as claimed in any one of claims 8 to 12, wherein:
(i) the nickel-based composite hydroxide is represented by Chemical Formula 11:
Chemical Formula 11 Niₓ₁₁M¹_{y11}(OH)₂, and
wherein, in Chemical Formula 11, 0.6≤x11≤1, 0≤y11≤0.4, 0.9≤x11+y11≤1.1, and M¹ is one or more elements selected from among B, Ba, Ca, Ce, Co, Cr, Cu, Fe, Mg, Mn, Mo, Nb, Si, Sn, Sr, Ti, V, W, Y, and Zn; and/or
(ii) an average particle diameter of the secondary particles is about 10 µm to about 20 µm, and
an average particle diameter of the plurality of primary particles constituting the secondary particles is about 1 µm to about 4 µm.

14. A positive electrode, comprising:
a positive electrode current collector; and
a positive electrode active material layer provided on the positive electrode current collector and comprising the positive electrode active material as claimed in any one of claims 1 to 7.

15. A rechargeable lithium battery, comprising:
the positive electrode as claimed in claim 14;
a negative electrode; and
an electrolyte.
